## Europäisches Patentamt
## European Patent Office
## Office européen des brevets

(19)

(11) Veröffentlichungsnummer : **0 087 652**
**B1**

(12) **EUROPÄISCHE PATENTSCHRIFT**

(45) Veröffentlichungstag der Patentschrift :
03.12.86

(51) Int. Cl.⁴ : **H 01 J 9/44, H 04 N 17/02**

(21) Anmeldenummer : **83101344.6**

(22) Anmeldetag : **12.02.83**

(54) **Messkopf zur Erfassung der Farbeneinheit und der Konvergenz bei einer Farbbildröhre.**

(30) Priorität : **26.02.82 DE 3206913**

(43) Veröffentlichungstag der Anmeldung :
**07.09.83 Patentblatt 83/36**

(45) Bekanntmachung des Hinweises auf die Patenterteilung : **03.12.86 Patentblatt 86/49**

(84) Benannte Vertragsstaaten :
**DE FR GB IT NL**

(56) Entgegenhaltungen :
**EP-A- 0 037 766**
**EP-A- 0 062 281**
**GB-A- 2 048 625**
**US-A- 4 001 877**

(73) Patentinhaber : **International Standard Electric Corporation**
**320 Park Avenue**
**New York New York 10022 (US)**
**FR GB IT NL**
**Standard Elektrik Lorenz Aktiengesellschaft**
**Hellmuth-Hirth-Strasse 42**
**D-7000 Stuttgart 40 (DE)**
**DE**

(72) Erfinder : **Mattle, Hans Peter**
**Buchenweg 4**
**D-7050 Waiblingen (DE)**

(74) Vertreter : **Pohl, Herlbert, Dipl.-Ing et al**
**Standard Elektrik Lorenz AG Patent- und Lizenzwesen**
**Kurze Strasse 8 Postfach 300 929**
**D-7000 Stuttgart 30 (DE)**

**Beschreibung**

Die Anmeldung betrifft einen Gegenstand gemäß Oberbegriff des Patentanspruchs 1. Dieser gehört in das Gebiet der Automatisierung von Fertigungseinrichtungen und dort zur Meßtechnik, die bei der Einstellung von Farbbildröhren d. h. der Justierung der drei zur Anregung der Farben Rot, Grün und Blau des Leuchtschirmes dienenden Elektronenstrahlen angewandt wird.

Bei einer Farbbildröhre mit Schattenmaske müssen die Richtungen, in welchen die Elektronenstrahlen durch die Öffnungen der Schattenmaske hindurchtreten, genau auf die ihnen zugeordneten Leuchtstreifen des Leuchtschirmes weisen, damit Farbreinheit entsteht, und alle drei Elektronenstrahlen müssen konvergieren, d. h. gleichzeitig durch dieselbe Öffnung der Schattenmaske treten. Unter Leuchtstreifen werden hier senkrecht verlaufende, streifenförmige, mit Leuchtstoff belegte Flächen auf der Innenseite des Leuchtschirmes einer Farbfernsehröhre verstanden. Die Leuchtstreifen verlaufen entweder ohne Unterbrechung durchgehend über die gesamte Bildschirmhöhe oder sie sind als unterbrochene, aneinandergereihte, quadratische, runde oder rechteckige Leuchtflächen angeordnet. Sie bilden in ihrer Gesamtheit den Leuchtschirm der Farbbildröhre.

Bisher wurden bei der Herstellung von Farbbildröhren im Fertigungsablauf die Farbreinheit und Konvergenz manuell eingestellt und erforderlichenfalls bei der Qualitätskontrolle nachgestellt. Die Einstellung von Farbreinheit und Konvergenz wird in modernen Fertigungsabläufen jedoch mit Regelkreisen automatisch durchgeführt. Dazu werden Meßköpfe mit Sensoren vor dem Bildschirm der Farbbildröhre angeordnet, um Information über die Lagefehler der Elektronenstrahlen (Strahlablagen) zu erhalten, und Magnetisiervorrichtungen am Hals der Bildröhre werden von diesen Informationen abgeleitete Stromimpulse zugeführt, mit denen in oder über dem Elektronenstrahlerzeugersystem der Farbbildröhre angeordnete Dauermagnetringe magnetisiert werden. Die Magnetisierungsmuster dieser Dauermagnetringe (Richtung und Stärke der Magnetisierung auf dem Umfang der Dauermagnetringe) werden bei wiederholten Regelungsvorgängen im Regelkreis « Leuchtfleck-Sensor-Auswerteelektronik-Impulsgeber-Magnetisierungsvorrichtung-Dauermagnetring-Strahlablenkung » so lange beeinflußt, bis Konvergenz und Farbreinheit eingestellt sind.

Für die Erzeugung der Information sind Meßköpfe erwünscht, welche nicht genau auf irgendeine Leuchtstreifengruppe (bestehend aus je einem roten, grünen und blauen Leuchtstreifen) oder gar einen einzelnen Leuchtstreifen Lagegenau eingestellt werden müssen.

Bei dem bekannten Meßkopf (DE-A-31 13 454) dient deshalb als Kriterium für die Konvergenz das gleichzeitige Sichtbarwerden von durch Elektronenstrahlen angeregten Leuchtstreifen hinter einer Blendenkante. Die Lage des Meßkopfes ist dabei nicht abhängig von der Lage einer Leuchtstreifengruppe.

Zur Ermittlung der für die Einstellung der Konvergenz benötigten Information mit dem bekannten Meßkopf werden die Elektronenstrahlen vertikal oder horizontal periodisch um einige Zentimeter abgelenkt, so daß jeder Elektronenstrahl ein schmales Leuchtband erzeugt. Bei Mißkonvergenz decken sich zunächst weder die horizontalen noch die vertikalen Leuchtbänder. Horizontale und vertikale Konvergenz müssen deshalb eingestellt werden. Dies erfolgt nach dem Einstellen der Farbreinheit. Die Leuchtbänder werden dazu rechtwinklig zu ihrer Längserstreckung durch eine weitere, relativ langsame Ablenkung vor einer kleinen Blendenöffnung vorbeibewegt. Diese Bewegung der Leuchtbänder an der Blende vorbei geschieht beim Einstellen der Horizontalkonvergenz durch eine horizontale Bewegung der vertikalen Leuchtbänder und durch vertikale Bewegung von horizontalen Leuchtbändern beim Einstellen der Vertikalkonvergenz.

Sensoren des Meßkopfes, die hinter der Blende angeordnet sind, erzeugen Signale mit ansteigender Stärke, wenn Leuchtstreifen im Bereich der Blendenöffnung von den abgelenkten Elektronenstrahlen angeregt werden, wenn also ein Leuchtband in die Blendenöffnung eintritt. Bei Mißkonvergenz sind die von den einzelnen Leuchtbändern erzeugten Signale zeitlich gegeneinander verschoben. Als Indikatoren für die unterschiedlichen Zeitlagen der Signale dienen separate Schwellwertdetektoren mit angeschlossenen Zeitzählern für das rote, grüne und blaue Leuchtband. Übersteigt ein Signal eine Intensitätsschwelle, so wird ein betreffender Zähler gestartet. Die Größe der Zeitdifferenz zwischen einem vom roten oder blauen Leuchtband erzeugten Signal und dem vom grünen Leuchtband erzeugten Signal ist ein Maß für die Ablagefehler des entsprechenden Elektronenstrahls und damit der Mißkonvergenz. Die mit der Intensitätsschwelle überwachte Zeitlage der Signale wird bei dem bekannten Meßkopf nicht nur — wie erwünscht — von dem Ablageort des Elektronenstrahls bestimmt, sondern auch von seinem Querschnitt, seiner Strahlstromstärke und von der Leuchtstärke der Leuchtstreifen sowie der Empfindlichkeit der Sensoren, denn der Zeitpunkt der Überschreitung der Intensitätsschwelle ist nicht nur von der Zeitlage des Signals, sondern auch von seiner Verlaufsform und seiner Intensität abhängig.

Weiterhin ist bei dem bekannten Meßkopf eine Korrektur der Zeitlage des Signalverlaufes erforderlich, weil die Blendenkante bei in Meßposition befindlichem Meßkopf nicht immer genau zwischen zwei Leuchtstreifengruppen liegt. Die Position des Meßkopfes soll jedoch nicht nur von der Lage der Leuchtstreifengruppen, sondern auch von der Leuchtstreifenlage, nämlich den unvermeidlichen Lageunterschieden der roten, grünen und blauen Leuchtstreifen ein und derselben Leuchtstreifengruppe, unabhängig sein, damit die Messung ohne Justierung des Meßkopfes schnell durchgeführt werden kann.

Der bekannte Meßkopf ist deshalb durch eine Zeitkorrekturschaltung ergänzt, welche der Auswerteelektronik zugeordnet ist und die dadurch verursachten Zeitunterschiede berücksichtigt, daß die drei Farben nebeneinander auf dem Leuchtschirm angeordnet sind.

Aufgabe der Erfindung ist es, einen Meßkopf zu schaffen, bei dem keine Zeitkorrektur mehr vorgenommen werden muß und bei dem die Sensorsignale intensitätsunabhängig sind, so daß weder die getrennte Lage der Farben einer Leuchtstreifengruppe mit Hilfe einer farbbezogenen Zeitkorrektur berücksichtigt werden muß, noch die Erkennung der Zeitlage der Sensorsignale unerwünscht beeinflußt wird von Störungen der Signalintensität wie z. B. durch Unterschiede in der Intensitätsverteilung im Leuchtfleck, verschiedener Strahlstromstärken oder ungleicher Leuchtstoffintensitäten.

Diese Aufgabe ist durch die im Kennzeichen des Anspruchs 1 angegebenen Mittel gelöst. Vorteilhafte Ausgestaltungen der Erfindung sind in den Ansprüchen 2 bis 7 enthalten. Mit der erfindungsgemäßen Lösung wird der beim Anordnen des Meßkopfes vor dem Bildschirm der Farbbildröhre zufällig sich ergebende Lageunterschied zwischen der Leuchtstreifenlage und der Lage der Blendenkante dadurch ausgeschaltet, daß die Sensoren im Meßkopf in einem entsprechenden Abstand zueinander und zur Blende derart angeordnet sind, daß jeder Sensor bei jeder beliebigen Lage des Meßkopfes von den ihm zugeordneten Leuchtstreifen gleichchermaßen beleuchtet wird.

Der Einfluß der Strahlstromstärke und des Strahldurchmessers sowie der Leuchtstärkeunterschiede und der Sensorenempfindlichkeit auf die Information wird durch entsprechende Formgebung der Blendenöffnung ausgeschaltet. Die Kontur der Blendenöffnung kann quadratisch, rhombisch oder trapezförmig sein oder eine Diagonale bzw. eine der parallelen Trapezlinien der Blendenöffnung liegt parallel zu der Linie, auf der die drei Sensoren angeordnet sind. Diese Linie soll auch senkrecht zu den Leuchtstreifen verlaufen. Bei dieser Lage der Blendenöffnung tritt dann ein Leuchtband von der Spitze der keilförmigen Blendenöffnung her in den Blendenbereich ein, weswegen der Verlauf des Signals über der Zeit von der in Bewegungsrichtung sich keilförmig erweiternden Begrenzung der Blendenöffnung bestimmt wird. Abgesehen von der Zeit bis zum vollständigen Eintritt eines Leuchtbandes in die Blendenöffnung ist dann die Anstiegsform des Signals nicht mehr von Bedeutung. Als letzter Störfaktor bleibt die Intensität des Signals. Bei Anwendung der erfindungsgemäßen Blendenform und Sensoranordnung kann die Intensität der Signale durch einen einfachen Rechengang eliminiert werden. Dazu wird der vom Winkel der Blendenöffnung bestimmte Signalanstieg linearisiert und auf 0 extrapoliert. Der Vergleich zweier Nulldurchgänge der von zwei Leuchtbändern erzeugten Signale ergibt dann den exakten Zeitunterschied und daraus die gesuchte Ablage der Elektronenstrahlen.

Die Verarbeitung der von den Sensoren empfangenen Signale wird durch die erfindungsgemäße Ausbildung des Meßkopfes erheblich vereinfacht, weil keine Zeitkorrektur erfolgen muß. Die Positionierung des Meßkopfes vor dem Leuchtschirm der Röhre bleibt einfach, weil an die Lage des Meßkopfes keine Toleranzbedingung gestellt werden muß. In der Massenproduktion von Farbbildröhren bringt dies eine Vereinfachung der Prüf- und Meßapparatur und eine Beschleunigung des Ablaufs der Justierung.

Ein weiterer Vorteil der Erfindung ist dadurch gegeben, daß es die erfindungsgemäße Bauweise des Meßkopfes gestattet, ohne Standortveränderung des Meßkopfes auf dem Bildschirm Konvergenz und Farbreinheit einzustellen. Da die Meßkopfposition in bezug auf die Leuchtstreifengruppenlage unkritisch ist, ergibt sich vorteilhafterweise auch die wichtige Möglichkeit, mit demselben einfachen Meßkopf schnell nacheinander an mehreren Stellen des Bildschirms Konvergenz und Farbreinheit zu kontrollieren. Anhand von Figuren wird die Erfindung und ihre vorteilhafte Weiterbildung erläutert. Es zeigen:

Figur 1a in schematischer Darstellung die wesentlichen Bestandteile von Meßkopf und Farbbildröhre beim Stand der Technik;

Figur 1b in schematischer Darstellung die wesentlichen Bestandteile von Meßkopf und Farbbildröhre gemäß der Erfindung;

Figur 2a eine Blendenöffnung nach dem Stand der Technik in Beziehung zu den Leuchtbändern auf dem Bildschirm;

Figur 2b eine Blendenöffnung nach der Erfindung in Beziehung zu den Leuchtbändern auf dem Bildschirm;

Figur 3 die Sensoren in Beziehung zur Blendenöffnung;

Figur 4 verschiedene Ausgestaltungen der Blendenöffnung nach der Erfindung;

Figur 5a die von den Leuchtstreifen einer Leuchtstreifengruppe mit einem bekannten Meßkopf erzeugten Sensorsignale;

Figur 5b die von den Leuchtstreifen einer Leuchtstreifengruppe mit dem erfindungsgemäßen Meßkopf erzeugten Sensorsignale;

Figur 6a das von den Leuchtstreifen mehrerer Leuchtstreifengruppen bei Verwendung einer Blendenöffnung nach Fig. 2a (Stand der Technik) in einem der drei Farbsensoren erzeugte Gesamtsensorsignal;

Figur 6b das von den Leuchtstreifen mehrerer Leuchtstreifengruppen bei Verwendung einer Blendenöffnung nach Fig. 2b (Erfindung) in einem der drei Farbsensoren erzeugte Gesamtsensorsignal;

Figur 7 die drei Gesamtsensorsignale im Fall der Konvergenz;

Figur 8 zwei Gesamtsensorsignale im Fall der Mißkonvergenz.

Figuren 9 und 10 Beispiele für den Aufbau des Meßkopfes schematisch im Schnitt.

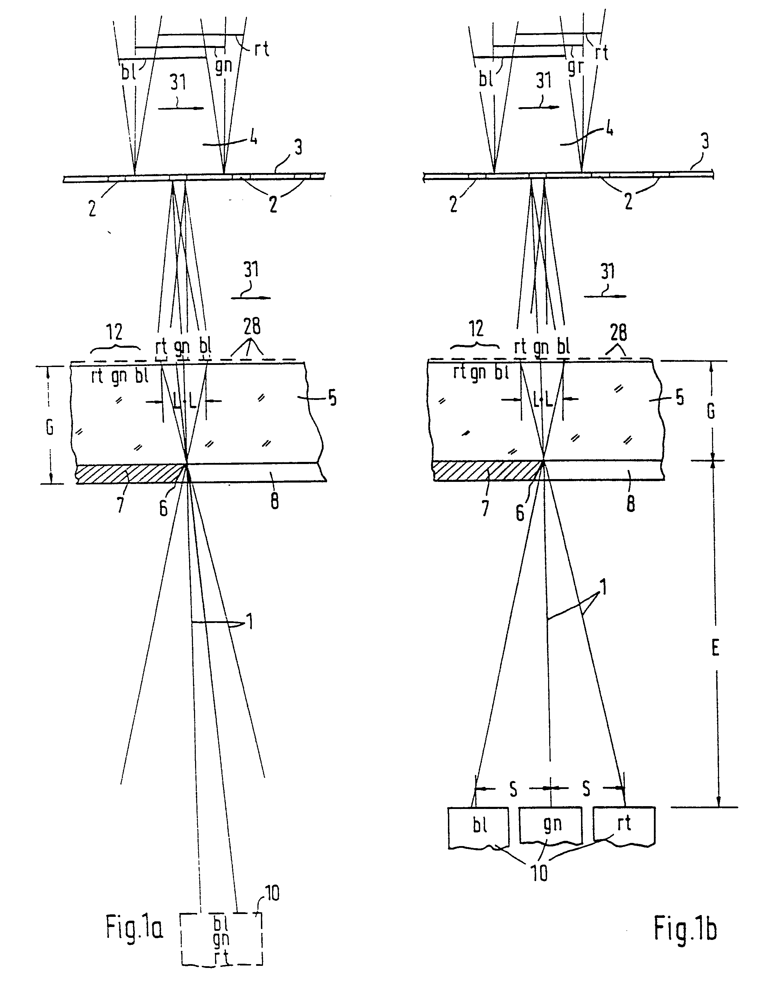

Fig. 1a zeigt einen Teil des bekannten Meßkopfes, der zwecks Erzeugung der Sensorsignale an einer beliebigen Stelle auf die Frontscheibe einer Farbbildröhre aufgesetzt ist. Der in Fig. 1a ersichtliche Ausschnitt aus der Frontscheibe 5 hat die Dicke G. Auf ihrer Rückseite ist die Frontscheibe mit den Leuchtstreifengruppen 12 versehen, welche jeweils aus einem roten, grünen und blauen Leuchtstreifen 28 bestehen, die untereinander den Mittenabstand L aufweisen. Ein Teil der Elektronenstrahlen 4 dringt durch die Öffnungen 2 der Farbauswahlelektrode 3. Wenn Farbreinheit und Konvergenz eingestellt sind, werden die Farbstreifen von den Elektronenstrahlen der ihnen zugehörigen Elektronenstrahlerzeugersysteme zum Leuchten gebracht. Während der Einstellung der Konvergenz liegt die Blende 7 vor der Frontscheibe 5. Das durch Elektronenstrahlanregung entstandene Licht der Leuchtstreifen kann daher nur durch die Öffnung 8 der Blende 7 auf die im Inneren des Meßkopfes befindlichen Sensoren 10 fallen. Die Blendenkante 6 der Blendenöffnung 8 deckt dabei die Leuchtstreifen einer Leuchtstreifengruppe unterschiedlich stark ab. Die bei dem bekannten Meßkopf übereinander angeordneten Sensoren 10 werden bei einer Zuordnung gemäß Fig. 1a vom Licht des roten Leuchtstreifens nicht getroffen, wie die Verbindungslinien 1 zeigen.

Fig. 1b zeigt die der Fig. 1a entsprechende Anordnung mit der erfindungsgemäßen Bemessung. Die Linien 1 zeigen hier, daß wenn die Entfernung Blende — Sensor E und der Mittenabstand zweier Sensoren S nach der Beziehung E/G = S/L gewählt sind, die Leuchtstreifen 28 einer Leuchtstreifengruppe 12 die ihnen zugeordneten Sensoren 10, unabhängig von der Lage der Blendenöffnung auf dem Bildschirm, stets gleichermaßen beleuchten. Nachstehend wird auf die Form dieser Blendenkante eingegangen, welche nach der Erfindung irgendwelche weiteren Störeinflüsse, welche die Signalstärke beeinflussen, unwirksam macht.

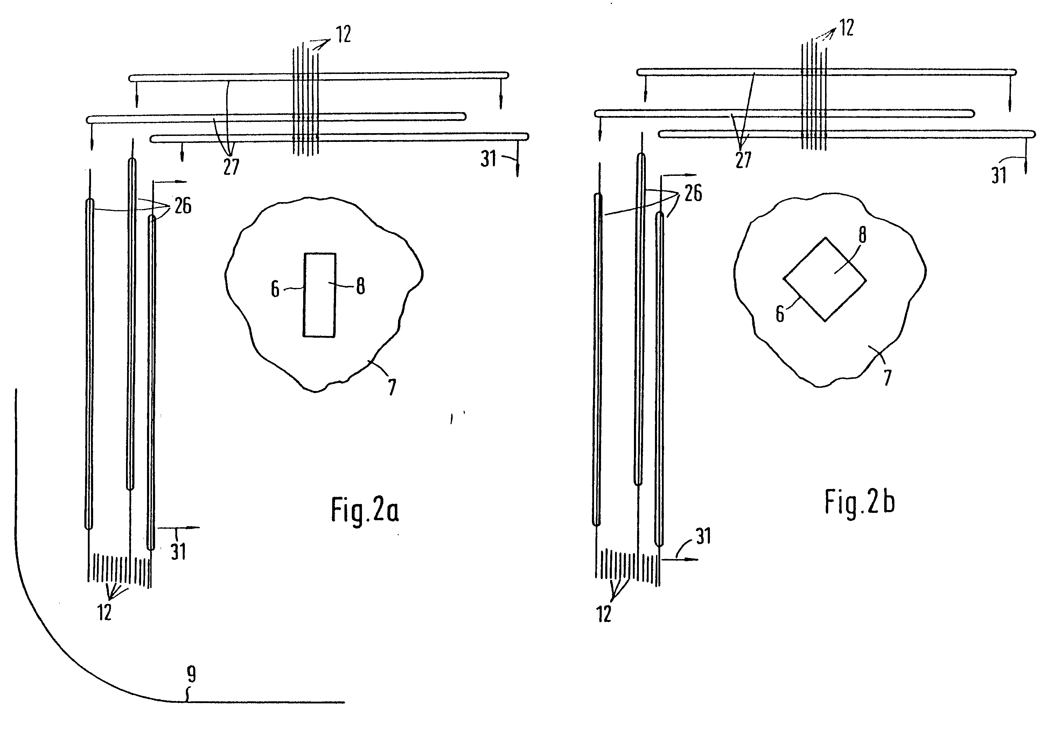

Fig. 2a zeigt dazu eine Blende nach dem Stand der Technik. Die Blendenöffnung 8 ist rechteckig und die Blendenkante 6 als Begrenzung dieses Rechtecks setzt sich aus den zu den Farbstreifen 12 parallelen längeren Seiten und den dazu senkrechten kürzeren Seiten zusammen. Hinter der Blende 7 werden zwecks Einstellung von Konvergenz die Leuchtbänder 26 (für horizontale Konvergenz) und 27 (für vertikale Konvergenz) vorbeibewegt. Dies geschieht durch relativ langsame Strahlablenkung in Richtung der Bewegungspfeile 31.

Fig. 2b gibt dieselbe Darstellung für eine erfindungsgemäße Blende. Die Blendenöffnung ist so angeordnet, daß die Leuchtbänder in der keilförmig sich erweiternden Blendenöffnung 8 den Sensoren 10 entsprechend dem Öffnungswinkel (in diesem Fall 90°) mit zunehmender Länge erscheinen.

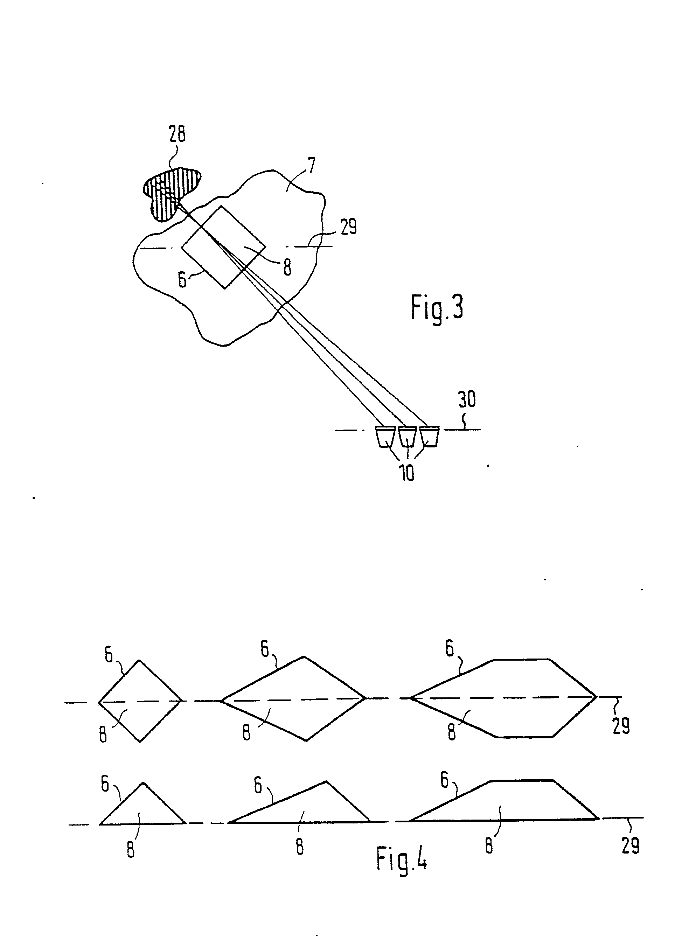

In Fig. 3 ist schematisch in perspektivischer Weise die Zuordnung von Leuchtstreifen 28, Blende 7 und Sensoren 10 gezeigt. Mit 29 ist die Diagonale der Blendenöffnung bezeichnet und 30 ist die Linie durch die Sensorachsen. Die beiden Linien 29 und 30 sind parallel und verlaufen senkrecht zu den Leuchtstreifen.

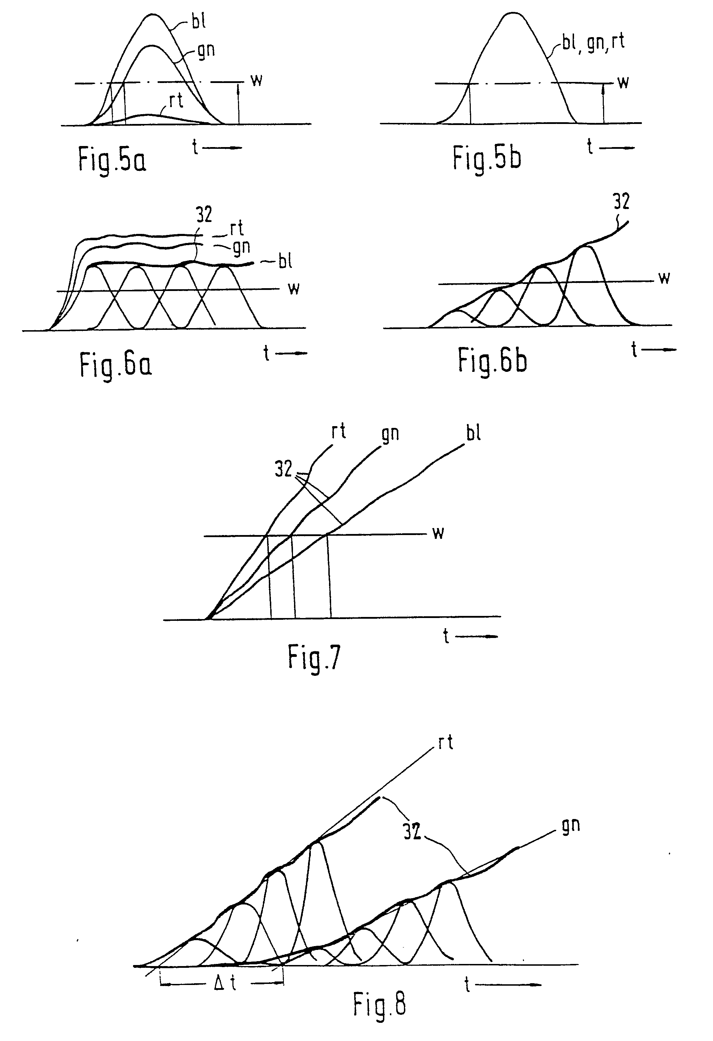

Fig. 4 zeigt verschiedene Ausführungsformen der Blendenöffnung 8. Die Blendenkante 6 verläuft so, daß sich die Blendenöffnung in Richtung der Diagonalen 29 und senkrecht zu dieser mindestens in je einem Teilbereich kontinuierlich erweitert. Die Diagonale 29 kann Symmetrielinie sein, mit einer Begrenzungslinie der Blendenöffnung zusammenfallen, oder nur zwei Eckpunkte verbinden. Wesentlich ist, daß in Richtung der Diagonalen 29 und senkrecht zu ihr mindestens ein Teil der Blendenöffnung sich stetig, im einfachsten Fall geradlinig, erweitert.

Die Fig. 5a zeigt den Verlauf der Sensorsignale über der Zeit, wie er sich bei Verwendung eines Meßkopfes nach dem Stand der Technik (Fig. 1a und Fig. 2a) ergibt, wenn die Verbindungslinie Sensor-Blendenkante des auf den Bildschirm aufgesetzten Meßkopfes nicht genau auf die Mitte zwischen zwei Leuchtstreifengruppen ausgerichtet ist. Die Darstellung gilt für diese und die folgenden Figuren bis einschließlich Fig. 7 für den Fall, daß Konvergenz der Elektronenstrahlen schon eingestellt ist.

Weil bei Konvergenz die Leuchtstreifen Rot, Grün und Blau gleichzeitig durch dieselbe Maskenöffnung angeregt werden, sind die Signale der drei Sensoren für die Farben Rot, Grün und Blau zeitgleich. Die Signalstärke ist jedoch unterschiedlich, wenn die angeregten Leuchtstreifen nicht alle innerhalb der Blendenöffnung liegen und somit die zugehörigen Sensoren ungleich stark beleuchten. Als Kriterium für die Zeitlage des Signals dient nach dem Stand der Technik der Zeitpunkt der Überschreitung einer Intensitätsschwelle W. Dieser Zeitpunkt ist, wie Fig. 5a erkennen läßt, nicht nur von der Zeitlage, sondern auch von der Stärke des Signals abhängig. Der nur zum Teil in der Blendenöffnung liegende rote Leuchtfleck erzeugt im Beispiel nur ein schwaches Signal, so daß der Rotstrahl als in der betreffenden Maskenöffnung noch nicht vorhanden gewertet wird.

In Fig. 5b ist dargestellt, wie mit der erfindungsgemäßen Anordnung nach Fig. 1b gleich starke Sensorsignale erzeugt werden und der scheinbare Zeitlagenunterschied daher verschwindet.

Aus Fig. 6a ist zu ersehen, wie sich die Sensorsignale mehrerer Leuchtstreifengruppen bei Verwendung einer Blendenform nach Fig. 2a zum Gesamtsensorsignal 32 addieren.

Die Signalstärke wird außerdem noch durch Leuchtstärkedifferenzen zwischen den Leuchtstreifen, unterschiedliche Stärke der Rot-, Grün- und Blaustrahlen, ungleiche Empfindlichkeiten der Rot-, Grün- und Blausensoren, verschiedene Lichtschwächung durch Farbfilter usw. störend beeinflußt, die Schwelle W also auch bei Konvergenz zu unterschiedlicher Zeit überschritten.

In Fig. 6b ist dargestellt, wie das Gesamtsensorsignal 32 verläuft, wenn eine Blende mit kontinuierlicher Öffnung nach Fig. 2b verwendet wird. An einer Ecke der sich erweiternden Blendenöffnung kann zunächst eine geringe Lichtmenge des Leuchtbandes 26 durch die Blende gelangen (Fig. 2b) ; die Lichtmenge vergrößert sich jedoch proportional dem Öffnungswinkel der Blendenöffnung, wenn das Licht der zunehmend Länger werdenden Farbstreifenabschnitte in die Blendenöffnung fällt. Das Gesamtsensorsignal kann nunmehr durch Extrapolation auf Null von störenden Intensitätsunterschieden getrennt werden, so daß die Zeitlage des Gesamtsensorsignals ohne Zuhilfenahme einer Intensitätsschwelle ermittelt werden kann.

Fig. 7 enthält drei Gesamtsensorsignale 32 für die drei Farben, welche bei Konvergenz, aber starker Störung durch Intensitätsunterschiede registriert werden. Eine Intensitätsschwelle W würde wieder unterschiedliche Zeitlagen anzeigen. Die Extrapolation der Gesamtsensorsignale jedoch zeigt einen gemeinsamen Schnittpunkt auf der Zeitachse, ein von den Intensitätsunterschieden der Rot-, Grün- und Blausignale unabhängiges Kriterium für die Konvergenz der zugeordneten Elektronenstrahlen.

Die Sensorsignale gemäß Fig. 8 verdeutlichen eine Mißkonvergenz zwischen dem Rot- und Grünstrahl. Die Gesamtsensorsignale 32 für Rot und Grün sind Linearisiert und bis zum Schnitt mit der Zeitachse extrapoliert. Aus dem Zeitunterschied Δt zwischen diesen beiden Schnittpunkten und der Bewegungsgeschwindigkeit der Leuchtbänder ergibt sich der Abstand zwischen der Ablage des Rotstrahls und des Grünstrahls auf dem Bildschirm.

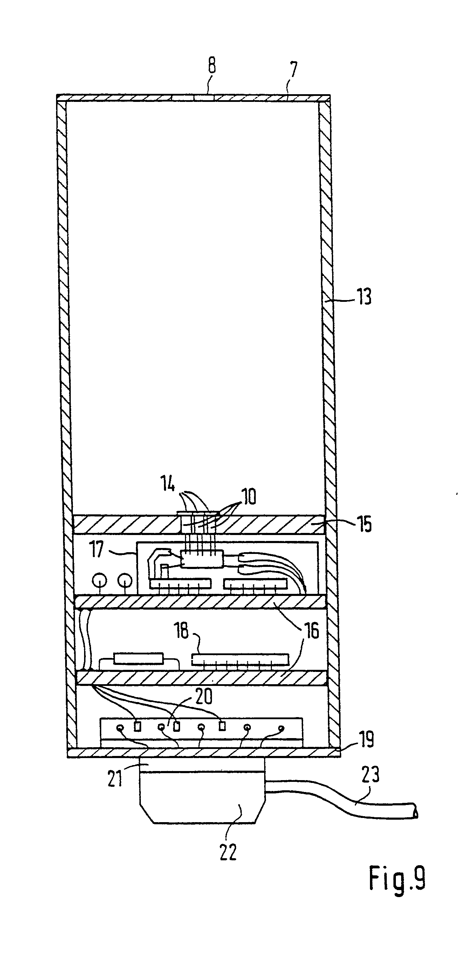

Fig. 9 zeigt einen Längsschnitt durch den Meßkopft. Das Meßkopfgehäuse 13 ist einerseits durch die Blende 7 mit Blendenöffnung 8 und andererseits durch die Rückwand 19 abgeschlossen. Die Sensoren 10 mit den Farbfiltern 14 sind in der Trägerplatte 15 befestigt und direkt am Vorverstärker 17 angeschlossen, welcher mit dem Hauptverstärker 18 verbunden ist. Die Ausgänge des Hauptverstärkers 18 führen zur Anschlußleiste 20, von der aus die Verbindungen zum Steckersockel 21 und weiter vom Stecker 22 über das Kabel 23 zu einem Auswertegerät verlaufen. Die Zwischenplatten 16 tragen die Verstärker. Die Blendenöffnung 8 ist so ausgebildet, wie dies in Fig. 4 an Beispielen dargestellt ist. Die Abstände S und E gemäß Fig. 1 sind entsprechend dem Leuchtstoffstreifen-Abstand L sowie der Glasdicke G der Frontscheibe 5 der einzustellenden Farbbildröhre gewählt.

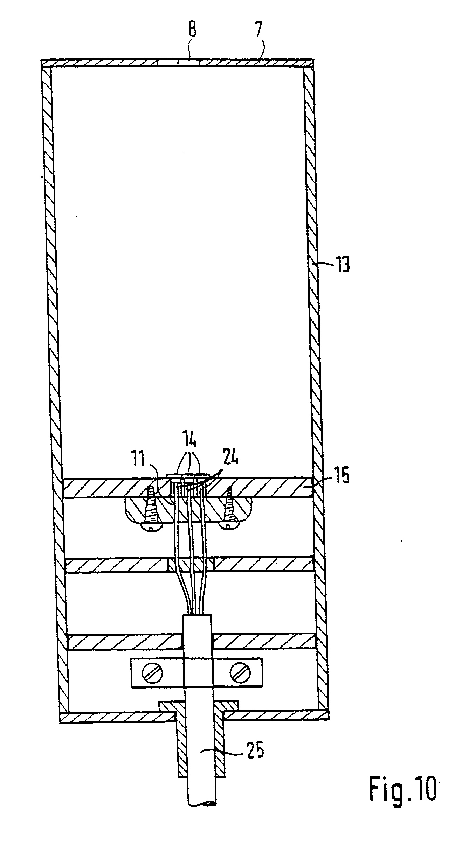

Fig. 10 zeigt eine andere Ausführungsform des Meßkopfes nach Fig. 9, bei welcher die Sensoren nicht im Meßkopf selbst sondern in dem weiter entfernten Auswertegerät untergebracht sind. An der Stelle, an der bei dem anderen Meßkopf die Sensoren angeordnet sind, befinden sich die Enden von drei Glasfasern oder Glasfaserbündeln 24. Durch das Glasfaserkabel 25 werden die Lichtsignale zu den im Auswertegerät befindlichen Sensoren, z. B. Photovervielfachern, weitergeleitet.

Bei der Herstellung und Qualitätskontrolle von Farbbildröhren werden zur Beobachtung der Konvergenz die Elektronenstrahlen periodisch abgelenkt, so daß jeder Strahl Leuchtbänder 26 bzw. 27 in den Farben Rot, Grün bzw. Blau bildet. Die Leuchtbänder werden durch zusätzliche Langsamere Ablenkung senkrecht zur Richtung, in der sich die Leuchtbänder erstrecken, bewegt. Zur Erzeugung der Sensorsignale wird ein Meßkopf mit seiner Blende 7 (vgl. Fig. 1) auf das Glas der Frontscheibe 5 aufgesetzt. Dann wird die Konvergenz der Elektronenstrahlen dadurch eingestellt, daß die vom Rot-, Grün- und Blaustrahl erzeugten Leuchtbänder zur Deckung gebracht werden. Die Elektronenstrahlen konvergieren in der Ebene der Farbauswahlelektrode 3, auch Schattenmaske oder kurz Maske genannt. Durch die Öffnungen 2 dieser Maske treffen die Elektronenstrahlen auf die ihnen zugeordneten Leuchtstreifen 28 der Leuchtstreifengruppe 12. Auf der anderen Seite der Blende 7 sind die Sensoren 40 angeordnet, welche entsprechend der Helligkeit der Leuchtstreifen Signale erzeugen. Bei dem bekannten Meßkopf weisen die Sensoren einen nicht näher definierten Abstand von der Blende auf. Bei dem erfindungsgemäßen Meßkopf liegen die Sensoren in einer Linie nebeneinander, sind durch den Mittenabstand S voneinander getrennt und befinden sich im Abstand E von der Blende. Der Abstand E ergibt sich erfindungsgemäß aus dem geeignet gewählten Mittenabstand S der Sensoren, der Glasdicke G der Frontscheibe und dem Mittenabstand L der Leuchtstreifen nach der Beziehung E = G.S/L. Im Vergleich zu den Leuchtstreifen 28 ist die Farbfolge bei den Sensoren umgekehrt, so daß die gedachten Verbindungslinien 1 (Fig. 1b) zwischen jeweils farblich zugeordneten Leuchtstreifen und Sensoren verlaufen.

Werden die Elektronenstrahlen gemeinsam in Richtung des Pfeiles 31 weiter abgelenkt, so treten sie nacheinander durch weitere Öffnungen 2 in der Maske 7 und lassen bei Konvergenz die drei Farben der jeweils zugehörigen Leuchtstreifengruppe gleichzeitig aufleuchten. Dabei gibt ein Sensor 10 des bekannten Meßkopfes, wie er in Fig. 1a gezeigt ist, beim Aufleuchten der durch die Öffnung der Schattenmaske gleichzeitig beleuchteten Leuchtstreifen 28 der Leuchtstreifengruppe ungleich starke Signale der drei Leuchtstreifen, weil die Blendenkante 6 den roten Leuchtstreifen fast vollständig und den grünen zu einem kleinen Teil verdeckt, während der blaue Leuchtstreifen voll sichtbar ist (vgl. Fig. 5a).

Bei einem erfindungsgemäßen Meßkopf, der im Abstand E = G/L. S mit der Mittenentfernung S angeordnete Sensoren besitzt, entstehen demgegenüber die in Figur 5b gezeigten gleichen Sensorsignale für die drei Farben. Somit ist für den Fall konvergenter Elektronenstrahlen Gleichzeitigkeit der von ihnen bewirkten Sensorsignale hergestellt. Sofern diese Sensorsignale dann nicht nur gleiche Zeitlage, sondern auch gleiche Stärke besitzen, überschreiten sie einen Schwellwert W alle gleichzeitig, welches als Zeichen für Konvergenz gewertet wird.

Die erfindungsgemäße Bemessung des Meßkopfes hat zunächst die Wirkung, daß das von nebeneinander liegenden Leuchtstreifen einer Leuchtstreifengruppe ausgehende Licht gleichzeitig auf die Sensoren trifft. Sofern die so erzeugten gleichzeitigen Signale auch gleiche Intensität und gleiche zeitliche Verlaufsform aufweisen, tritt kein die Konvergenzanzeige störender Fehler auf.

In Wirklichkeit wird die Stärke des Sensorsignals unter anderem aber von Leuchtstärkedifferenzen zwischen den verschiedenfarbigen Leuchtstreifen, Abweichungen der Strahlstromstärken der Elektronenstrahlen, ungleichen Sensorempfindlichkeiten und Farbfilterdämpfungen störend beeinflußt.

Auch die Gleichheit der Verlaufsform der Signale wird gestört, z. B. von Unterschieden in den Strahldurchmessern und der Verschiedenheit der Stromverteilung über den Strahlquerschnitten, sowie durch ungleich breite Leuchtstreifen.

Die Form der Blendenöffnung wurde deshalb so gestaltet, daß die erwähnten Einflüsse nicht mehr stören. Dies geschieht durch die Blendenöffnungen, von denen einige Ausführungsbeispiele in Figur 4 dargestellt sind. Die Figur 3 zeigt ein Beispiel der erfindungsgemäßen Anordnung. Die Linie 30, auf der die Sensoren angeordnet sind, liegt dabei parallel zur Diagonalen der Blendenöffnung. Die Linie 30 steht stets senkrecht zu den Leuchtstreifen. Wenn sich die Blende in Bewegungsrichtung der Leuchtbänder keilförmig öffnet, dann wird der Einfluß der unterschiedlichen Anstiegsformen der Signalverläufe und der Intensitätsunterschiede auf die Sensorsignale ausgeschaltet. Mit Hilfe der Figuren 6b bis 8 wird diese Wirkung der keilförmigen Blendenöffnungen erläutert.

Von dem sich bewegenden Leuchtband werden die Leuchtstreifengruppen der Reihe nach durch die Maskenöffnungen hindurch angeregt. Es addieren sich dabei die von den einzelnen Leuchtstreifen erzeugten Signale zum Gesamtsensorsignal 32 (vgl. Fig. 6a). Das Gesamtsensorsignal nach Fig. 6a entsteht mit einer Blende des bekannten Meßkopfes gemäß Fig. 2a mit einer senkrecht zur Bewegungsrichtung der Leuchtbänder geradlinig begrenzten Öffnung. Mit einer sich keilförmig öffnenden Blende (Fig. 2b) ergibt sich der in Fig. 6b skizzierte kontinuierlich ansteigende Verlauf des Gesamtsensorsignals 32 für jede Farbe.

Bei einer solchen Summierung der erzeugten Einzelsignale gemäß Fig. 6b gleicht sich deren Anstiegsform weitgehend aus, so daß diese, im Anstieg sich auswirkenden, den Zeitpunkt der Überschreitung des Schwellwertes W beeinflussenden Störungen ausgeschaltet sind.

Es ist auch die Störung zu beseitigen, die dadurch entsteht, daß der Verlauf des Gesamtsensorsignals 32 von Unterschieden beispielsweise der Strahlstromstärke des Elektronenstrahls, der Empfindlichkeit der Sensoren, der Farbfilterdämpfung beeinflußt ist. In Fig. 7 ist das Gesamtsensorsignal sämtlicher Farben, wobei die Einzelsignale unterschiedliche Intensität besitzen, wiedergegeben. Die zeitlichen Unterschiede der Anregung der Leuchtstreifen werden durch die Nulldurchgänge der Linearisierten und extrapolierten Gesamtsensorsignale angezeigt. Wenn Mißkonvergenz vorhanden ist, so erhält man Nulldurchgänge zu unterschiedlichen Zeiten (vgl. Fig. 8). Der Zeitunterschied $\Delta t$ gibt die « Ablage » eines Elektronenstrahls, z. B. in Beziehung zu einem als Bezugsstrahl verwendeten Elektronenstrahl an.

Fig. 9 zeigt eine vorteilhafte Ausgestaltung des mechanischen Aufbaus eines erfindungsgemäßen Meßkopfes. Die schwachen Sensorsignale werden von einem direkt an den Sensoren angeordneten Vorverstärker 17 über den Umgebungsstörpegel gehoben. Wenn es sich bei den Störungen vorwiegend um elektrische Störungen handelt, kann die so entstandene Beeinträchtigung gemäß Fig. 10 dadurch ausgeschaltet werden, daß an Stelle der Sensoren Glasfasern 11 vorhanden sind, welche die Lichtsignale aufnehmen und an im Auswertegerät untergebrachte Sensoren weiterleiten. Dies ist besonders dann günstig, wenn als Sensoren nicht kleine Halbleiterdetektoren, sondern größere Photovervielfacher eingesetzt werden. Auch die Farbfilter 14 können dann am Ende des Glasfaserkabels 25 nahe der Auswerteelektronik untergebracht sein. Anstelle des Farbfilters oder zwischen Farbfilter und Sensoren kann auch eine Anpassungsoptik vorgesehen sein, welche insbesondere bei Anwendung von Halbleiterlichtverstärkern am Anfang und am Ende des Glasfaserkabels erforderlich ist.

Bezugszeichen

1 Verbindungslinien
2 Öffnungen
3 Farbauswahlelektrode (Maske)
4 Elektronenstrahlen
5 Frontscheibe
6 Blendenkante
7 Blende
8 Blendenöffnung
9 Bildschirmbegrenzung
10 Sensor
11 Glasfaser
12 Leuchtstreifengruppe
13 Meßkopfgehäuse
14 Farbfilter
15 Trägerplatte
16 Platinen
17 Vorverstärker
18 Hauptverstärker
19 Rückwand
20 Anschlußleiste

6

21 Steckersockel
22 Stecker
23 Kabel
24 Glasfaserbündel
25 Glasfaserkabel
26 Leuchtband bei vertikaler Strahlauslenkung
27 Leuchtband bei horizontaler Strahlablenkung
28 Leuchtstreifen
29 Diagonale
30 Linie durch die Sensorachsen
31 Pfeile (Bewegungsrichtung)
32 Gesamtsensorsignal

G Glasdicke der Frontscheibe
E Entfernung Blende-Sensor
S Mittenabstand der Sensoren
L Mittenabstand der Leuchtstoffstreifen
T Mittenabstand der Leuchtstoffstreifengruppen
rt Rot   ) Bezeichnung für Elektronenstrahlen
gn Grün } und zugehörige
bl Blau   ) Leuchtstreifen

**Patentansprüche**

1. Meßkopf zur Erfassung der Konvergenz und der Farbreinheit von Farbbildröhren mit streifenförmig angeordneten Leuchtflächen, bestehend aus einer Blende mit einer Blendenöffnung, einem Meßkopfgehäuse, einer Sensorträgerplatte mit je einem Sensor für die Farben Rot, Grün und Blau, dadurch gekennzeichnet, daß die Sensoren in einer Entfernung E = G.S/L von der Blende (7) und in einer Linie angeordnet sind, wobei G die Glasdicke der Frontscheibe der Farbbildröhre, S den Mittenabstand der Sensoren und L den Mittenabstand der Leuchtstreifen bedeuten, und daß in zwei zueinander senkrechten Richtungen jeweils wenigstens ein Teil der Blendenöffnung (8) keilförmig ausgebildet ist.

2. Meßkopf nach Anspruch 1, dadurch gekennzeichnet, daß als Sensoren je eine rot-, blau- und grünempfindliche Photodiode vorgesehen sind.

3. Meßkopf nach Anspruch 1, dadurch gekennzeichnet, daß als Sensoren Photovervielfacher vorgesehen sind.

4. Meßkopf nach Anspruch 1, dadurch gekennzeichnet, daß als Sensoren Halbleiterlichtverstärker vorgesehen sind.

5. Meßkopf nach einem der Ansprüche 2 bis 4, dadurch gekennzeichnet, daß den Sensoren (10) Farbfilter (14) zugeordnet sind, welche die Sensoren auf die Farben des Leuchtschirmes abstimmen.

6. Meßkopf nach einem der Ansprüche 1 bis 5, dadurch gekennzeichnet, daß an die Sensoren Anpassungs- bzw. Übertragungsoptiken anschließen.

7. Meßkopf nach Anspruch 6, dadurch gekennzeichnet, daß an die Anpassungsoptik eine Übertragungsoptik mit faserförmigen Lichtleitkörpern (11, 24) angeschlossen ist.

**Claims**

1. Measuring head for determining the convergence and the colour purity of colour TV picture tubes having phosphor areas arranged in the form of stripes, consisting of a diaphragm with a diaphragm aperture, a housing for the measuring head and a base plate carrying the sensors, with one sensor each for the colours red, green, and blue, characterized in that the sensors are arranged in one line at a distance E = G.S/L from the diaphragm (7), G representing the thickness of the glass of the screen of the colour picture tube, S the centre-to-centre spacing of the sensors and L the centre-to-centre spacing of the phosphor stripes, and that, in each of two directions perpendicular to one another, at least one portion of said diaphragm aperture (8) is wedge-shaped.

2. A measuring head as claimed in Claim 1, characterized in that one red-, one blue-, and one green-sensitive photodiode are provided as sensors.

3. A measuring head as claimed in Claim 1, characterized in that photomultipliers are provided as sensors.

4. A measuring head as claimed in Claim 1, characterized in that semiconductor light amplifiers are provided as sensors.

5. A measuring head as claimed in any one of Claims 2 to 4, characterized in that to said sensors (10) there are assigned colour filters (14) which match the sensors to the colours of the screen.

6. A measuring head as claimed in any one of Claims 1 to 5, characterized in that said sensors are

7

**0 087 652**

followed by optical matching or transforming means.

7. A measuring head as claimed in Claim 6, characterized in that optical transforming means including optical fibre bodies (11, 24) are connected to said optical matching means.

**Revendications**

1. Tête de mesure pour déterminer la convergence et la pureté de couleurs de tubes image de télévision en couleurs ayant des zones de phosphores disposées en forme de bandes, consistant en un diaphragme, avec un orifice de diaphragme, un boîtier pour la tête de mesure, une plaque de base portant des capteurs, comprenant un capteur pour chacune des couleurs, rouge, vert et bleu, caractérisé en ce que les capteurs sont disposés selon une ligne, à une distance $E = G.S/L$ du diaphragme (7), G étant l'épaisseur du verre de l'écran du tube image couleurs, S, l'espacement des capteurs et L, l'espacement des bandes de phosphores, et en ce que, dans deux directions perpendiculaires l'une à l'autre, au moins une partie dudit orifice de diaphragme (B) est doté d'une forme en coin.

2. Tête de mesure selon la revendication 1, caractérisé en ce que, comme capteurs, il comporte respectivement des photodiodes sensibles au rouge, au vert et au bleu.

3. Tête de mesure selon la revendication 2 ou 3, caractérisé en ce que des photomultiplicateurs sont utilisés comme capteurs.

4. Tête de mesure selon la revendication 2 ou 3, caractérisé en ce que des amplificateurs de lumière à semi-conducteur sont utilisés comme capteurs.

5. Tête de mesure selon la revendication 2 ou 3, caractérisé en ce qu'à ces capteurs (10) sont affectés des filtres (14) qui adaptent les capteurs aux couleurs de l'écran.

6. Tête de mesure selon l'une quelconque des revendications 1 à 5, caractérisé en ce que lesdits capteurs sont suivis de moyens d'adaptation ou de transformation optique.

7. Tête de mesure selon la revendication 6, caractérisé en ce que des moyens de transformation optique comprenant des parties en fibre optique (11, 24) sont connectés auxdits moyens d'adaptation optique.

8

Fig.1a

Fig.1b

Fig.2a

Fig.2b

0 087 652

Fig.3

Fig.4

Fig.5a

Fig.5b

Fig.6a

Fig.6b

Fig.7

Fig.8

Fig.9

Fig.10